# EUROPÄISCHE PATENTSCHRIFT

(11) **EP 1 166 950 B1**
(45) Veröffentlichungstag und Bekanntmachung des Hinweises auf die Patenterteilung: **29.10.2003**
(21) Anmeldenummer: 01110717.4
(22) Anmeldetag: 03.05.2001
(51) Int. Cl.: B64C 1/12

(54) **Strukturbauteil für ein Flugzeug**
Structure used in an aeroplane
Structure d'avion

(30) Priorität: 28.06.2000 DE 10031510
(43) Veröffentlichungstag der Anmeldung: 02.01.2002
(60) Teilanmeldung: 02026630.0
(73) Patentinhaber: Airbus Deutschland GmbH, 21129 Hamburg (DE)
(72) Erfinder: Schmidt, Hans-Jürgen, 21614 Buxtehude (DE)
(74) Vertreter: Hansmann, Dierk, Dipl.-Ing.

(56) Entgegenhaltungen:
- DE-C- 19 924 909
- US-A- 3 201 862
- US-A- 5 842 317

## Beschreibung

Die Erfindung betrifft ein Strukturbauteil für ein Flugzeug, wobei das Strukturbauteil mindestens ein Hautblech sowie auf das Hautblech aufgebrachte mehrere Versteifungsprofile aufweist und zumindest teilweise die Versteifungsprofile mittels einer Schweißverbindung mit dem Hautfeld verbunden sind.

Aus DE 196 39 667 oder DE 198 44 035 ist ein Strukturbauteil in geschweißter Haut-Stringer-Bauweise bekannt. Auf großformatigen Hautblechen werden mittels Laserstrahlschweißen Profile - als Stringer oder Spanten ausgebildet - aufgeschweißt. Derartige Strukturbauteile, die als Rumpfschalen in einem Flugzeug verwendet werden, müssen eine ausreichende Festigkeit aufweisen und zukünftig ein sogenanntes "Two Bay Crack"-Kriterium erfüllen. Zur Erfüllung dieses Kriteriums ist es notwendig, dass Rumpfstrukturen einen Längs- oder Umfangsriss über zwei Spantabschnitte oder zwei Stringerteilungen ertragen können. Dabei ist zusätzlich anzunehmen, dass die Versteifung in der Mitte des Risses gebrochen ist. Geschweißte Rumpfschalen weisen eine geringere Restfestigkeit gegenüber bisher üblichen Rumpfschalen mit geklebten oder genieteten Versteifungen, wie Stringer oder Spante auf. Bei einer solchen Differentialbauweise wirken die genieteten oder geklebten Versteifungen als Rissstopper bzw. Rissverzögerer. Der Rissfortschritt in der Rumpfbeplankung wird verzögert, da die Rissspitze durch die genietete oder geklebte Versteifung für eine bestimmte Anzahl von Lastwechseln zusammengehalten wird. Aufgrund der Lastumverteilung von der Beplankung in die Versteifung versagt nach einer Anzahl von Belastungen die Versteifung, welches zu einem schlagartigen Versagen der Rumpfbeplankung führt und damit zum Versagen der Rumpfschale. Dieses vorteilhafte Rissverzögerungsverhalten existiert nicht bei Strukturbauteilen mit aufgeschweißten Versteifungen. Bei geschweißten Strukturbauteilen setzt sich der Riss gleichzeitig in der Beplankung und der Versteifung fort, so dass keine rissverzögernde Wirkung auftritt. Dieses Verhalten führt zu einer verminderten Restfestigkeit und zu einem ungünstigen Rissfortschrittsverhalten. In Bereichen, in denen das Auslegungskriterium Restfestigkeit maßgebend ist, müssten die Schalen aufgedickt werden, um eine ausreichende Restfestigkeit zu erreichen. Das führt zu unakzeptablen Gewichtserhöhungen insbesondere in den Seiten- und Oberschalenbereichen des Rumpfes. Daher ist ein Einsatz von Rumpfschalen mit geschweißten Stringern in diesen Bereichen bisher nicht vorgesehen. Aus DE-PS 199 24 909 ist bekannt, an Hautblech-Versteifungsprofil-Verbindungen von Flugzeugstrukturteilen im Fußbereich der Versteifungsprofile eine Aufdickung vorzusehen, um eine Rissverzögerung durch eine ausreichende Materialanhäufung zu erreichen. Aus US-PS 5 842 317, welche als nächstliegender Stand der Technik betracktet wird, sind Verstärkungen im Bereich von Versteifungsprofilen von integralen Strukturbauteilen bekannt. Primär wird durch die Existenz eines Dickensprunges (bzw. eines Überhanges) in Verbindung mit inneren Spannungen, die durch plastische Verformungen eingebracht werden, eine Verbesserung des Schadensverhaltens von integralen Strukturen im Falle des Auftretens von Rissen erreicht. Ein minimales Bauteilsgewicht ist mit diesen Lösungen schwer erzielbar.

Der vorliegenden Erfindung liegt somit die Aufgabe zugrunde, ein Strukturbauteil so auszubilden, dass eine Erhöhung der Restfestigkeit unter Berücksichtung eines minimalen Bauteilgewichtes erreicht wird und somit ein Einsatz von geschweißten Rumpfschalen auch für den Seiten- und Oberschalenbereich des Rumpfes ermöglicht wird.

Diese Aufgabe wird bei einem Strukturbauteil durch die im Patentanspruch 1 genannten Maßnahmen gelöst. Ein Versteifungsprofil für die Verwendung bei Strukturbauteilen ist im Anspruch 11 angegeben Ein Verfahren zur Herstellung eines erfindungsgemäßen Strukturbauteils ist im Anspruch 14 angegeben.

Dabei ist insbesondere vorteilhaft, dass durch Erhöhung der Restfestigkeit eines geschweißten Strukturbauteils solches auch für Rumpfschalen eines Flugzeuges im Seiten- und Oberschalenbereich verwendet werden kann. So können generell geschweißte Rumpfschalen für den gesamten Rumpf angewendet werden und eine Beschränkung nur auf den Rumpfunterschalenbereich ist nicht gegeben. Aufgrund der kostengünstigen Bauweise gegenüber der herkömmlichen Rumpfschalenfertigung können Herstellungsaufwand und Strukturgewicht beachtlich verringert werden. Durch die Anordnung einer separaten Verstärkung an einem in Integralbauweise aufgebautem Strukturbauteil wird eine Grenzfläche geschaffen, in die ein Riss gelenkt werden kann und damit die dahinter liegende Struktur intakt bleibt. Durch das gezielte Einbringen eines separaten Bauteils wird nicht durch integrale Maßnahmen, d. h. Verdickungen und Materialanhäufungen, sondern durch gezieltes Anordnen eines Differentialbauteils das Schadenstoleranzverhalten (Verhinderung des Rissfortschritts, Erhöhung der Restfestigkeit) verbessert. Mit der erfindungsgemäßen Lösung werden die Nachteile von geschweißten Schalen eliminiert. Bei Primärrissen in der Beplankung, d.h. in der Rumpfhaut wird der gleichzeitig in den Versteifungsprofilen sich fortsetzende Riss durch die eingebrachten Verstärkungen verzögert oder gestoppt. Die Verstärkung der Versteifungsprofile hat somit eine verzögernde Wirkung auf den Beplankungsriss. Die Restfestigkeit von geschweißten Strukturbauteilen wird erhöht.

Weiterbildungen und vorteilhafte Ausgestaltungen sind in den Ansprüchen 2 bis 10, 12, 13 sowie 15 bis 19 angegeben. Weitere Vorteile ergeben sich aus der nachfolgenden Detailbeschreibung.

In der Zeichnung sind Ausführungsbeispiele der Erfindung dargestellt, die nachstehend anhand der Figuren 1 bis 6 näher beschrieben sind. In den Figuren sind gleiche Bauteile mit gleichen Bezugszeichen versehen.

Es zeigen:
- Fign. 1 und 2: einen Querschnitt durch das Strukturbauteil im Bereich des Stringers in einer ersten Ausführung,
- Fign. 3 und 4: einen Querschnitt durch das Strukturbauteil im Bereich des Spantes in einer ersten Ausführung,
- Fig. 5: einen Querschnitt durch ein Versteifungsprofil in einer zweiten Ausführung und
- Fig. 6: das Strukturbauteil im Bereich des Versteifungsprofils gemäß Fig. 5.

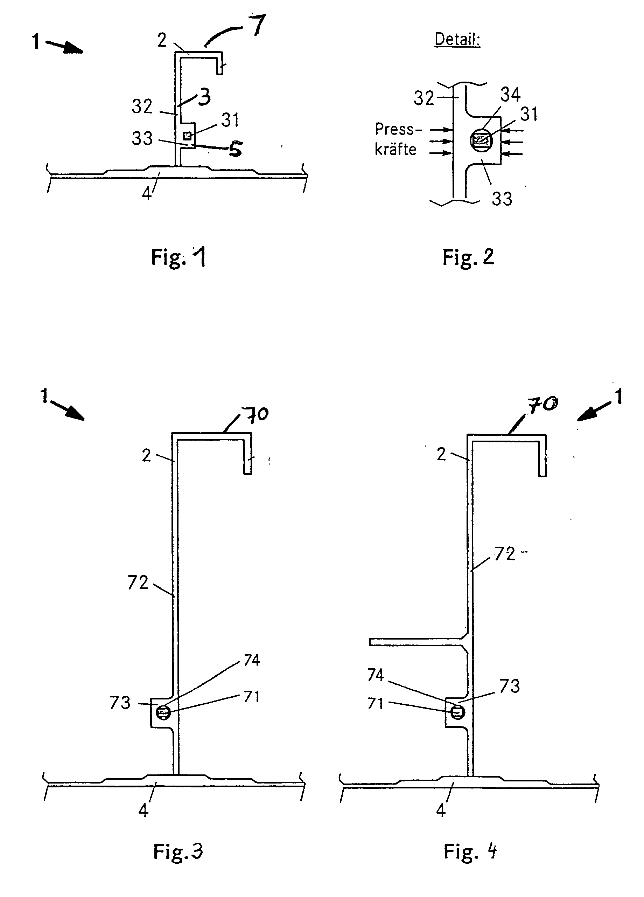

In den Figuren 1 bis 6 sind jeweils Ausschnitte eines Strukturbauteils 1 im Bereich eines Versteifungsprofils 2 gezeigt. Das Versteifungsprofil 2 ist als ein für eine Flugzeugrumpfstruktur in Flugzeuglängsrichtung verlaufender Stringer 3 ausgebildet, der auf einem Hautfeld 4 aufgeschweißt ist. Für ein Strukturbauteil 1 zur Verwendung als Rumpfschale eines Flugzeuges sind eine Vielzahl derartiger Stringer 3 in Flugzeuglängsrichtung angeordnet.
Wie aus DE 196 39 667 oder DE 198 44 035 bekannt, werden die Verbindungen zwischen dem Hautblech 4 und den Stringern 3 verschweißt, um gegenüber der herkömmlichen Methode mittels Nieten oder Kleben eine Gewichtsersparnis zu erzielen. Um die Restfestigkeit eines geschweißten Strukturbauteils 1 zu erhöhen, werden erfindungsgemäß am Stringer 3 Verstärkungen 5 eingebracht. Solche speziell ausgebildeten Stringer 3 werden mit den Verstärkungen 5 - hier Zugbänder - versehen bevor sie mit dem Hautfeld 4 verschweißt werden.

Die Figuren 1 und 2 zeigen eine Ausführungsform eines Stringers 30 mit einem Zugband 31, welches aus hochfesten Stahl- oder Titanlegierungen oder Faserverbundwerkstoffen besteht. Das Zugband 31 ist am Stringersteg 32 angeordnet, wobei dafür am Stringersteg 32 eine einseitige Werkstoffverdickung 33 vorgesehen ist, in die als Aufnahme für das Zugband 31 eine Durchgangsbohrung 34 in Stringerlängsrichtung eingebracht wurde. Die Werkstoffverdickung 33 ist vorzugsweise in der unteren Hälfte des Stringerstegs 32 vorgesehen. Das Zugband 31 mit vorzugsweise mehreckigem Querschnitt wird in die Bohrung 34 eingeführt und verdrillt. Quadratische oder rechteckige Querschnittsformen sind bevorzugt anwendbar. Mit dem Verdrillen wird erreicht, dass zwischen dem Zugband 31 und der Werkstoffverdickung 33 eine Relativverschiebung verhindert wird, wenn sich ein Riss bildet.
Nach einer Wärmebehandlung - beispielsweise einem Lösungsglühvorgang - des kompletten Stringers 30, um die Verformbarkeit des Werkstoffs zu verbessern, wird ein Formschluss zwischen dem Stringerprofil 30, d.h. der Werkstoffverdickung 33 und dem Zugband 31 durch Pressen erreicht.

Die Figuren 3 und 4 zeigen eine Ausführungsform eines Spantes 70 mit einem Zugband 71, welches aus hochfesten Stahl- oder Titanlegierungen oder Faserverbundwerkstoffen besteht und prinzipiell dem bereits beschriebenen Zugband 31 am Stringer 30 entspricht. Das Zugband 71 ist am Spantsteg 72 angeordnet, wobei dafür am Spantsteg 72, vorzugsweise in der unteren Hälfte, eine einseitige Werkstoffverdickung 73 vorgesehen ist, in die eine als Aufnahme für das Zugband 71 vorgesehene Durchgangsbohrung 74 in Spantlängsrichtung eingebracht wurde. Das Zugband 71 mit mehreckigem, vorzugsweise quadratischem Querschnitt wird in die Bohrung 74 eingeführt und verdrillt. Mit dem Verdrillen wird erreicht, dass zwischen dem Zugband 71 und der Werkstoffverdickung 73 eine Relativverschiebung verhindert wird, wenn sich ein Riss bildet.
Nach einer Wärmebehandlung, vorzugsweise einem Lösungsglühvorgang, des kompletten Spantes 70 wird ein Formschluss zwischen dem Spantprofil 70, d.h. der Werkstoffverdickung 73 und dem Zugband 71 durch Pressen erreicht.

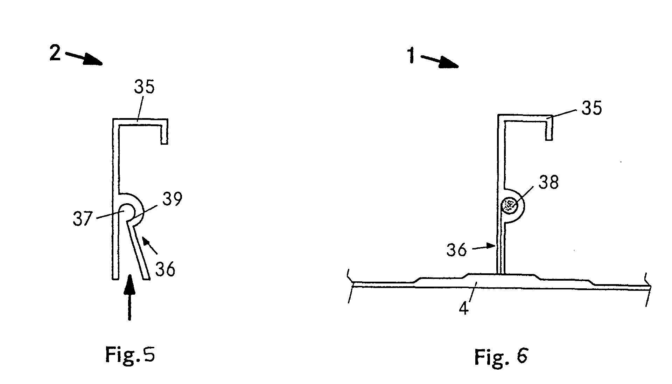

In den Figuren 5 und 6 ist das Strukturbauteil 1 in einer weiteren vorteilhaften Weiterbildung der Versteifungsprofile 2 gezeigt, die eine erhöhte Restfestigkeit der geschweißten Struktur ermöglichen.
Das Versteifungsprofil 2, welches hier als ein spezieller Stringer 35 ausgebildet ist, weist einen geschlitzten unteren Stegbereich 36 auf, der mit einer Aufnahmeöffnung 37 für ein Zugband 38 versehen ist. In Fig. 9 ist der Stringer 35 vor dem Einführen des Zugbandes 38 dargestellt. Der Stegbereich 36 ist so ausgebildet, das eine Klammer gebildet wird, in die das Zugband 38 eingeführt werden kann. In der Aufnahmeöffnung 37 ist ein Werkstoffabsatz 39 vorgesehen, den das Zugband 38 beim Einführen überwinden muss und es damit in der Aufnahmeöffnung 37 positioniert ist. Das Zugband 38 hat vorzugsweise einen runden Querschnitt und ist mit einer angerauten Oberfläche versehen. Andere Querschnitte des Zugbandes 38 sind ebenfalls möglich, jedoch sind runde Querschnitte bevorzugt anwendbar, da sie kostengünstig und leicht verfügbar sind. Das Anrauen ist eine Möglichkeit, um die Relativbewegung zwischen dem Zugband 38 und dem Stringer 35 zu behindern und damit eine Rissbildung zu verzögern. Als Materialien können die bereits genannten hochfesten Stahl- oder Titanlegierungen oder Verbundwerkstoffe verwendet werden. Nach dem Einführen des Zugbandes 38 erfolgt vorzugsweise eine Wärmebehandlung, wie das Lösungsglühen, um die Verformbarkeit des Werkstoffs zu verbessern. Nach dem Glühen wird durch Pressung ein Formschluss zwischen dem Stringer 35 im Bereich des Stegbereichs 36 und dem Zugband 38 hergestellt. Ein Verschweißen des Stringers 35 mit dem Hautfeld 4 kann anschließend erfolgen. Der Stringer 35 mit dem eingebrachten Zugband 38, der auf das Hautfeld 4 aufgeschweißt wurde, ist in der Fig. 6 gezeigt.

## Patentansprüche

1. Strukturbauteil für ein Flugzeug, wobei das Strukturbauteil (1) mindestens ein Hautblech (4) sowie auf das Hautblech (4) aufgebrachte mehrere Versteifungsprofile (2) aufweist und zumindest teilweise die Versteifungsprofile (2) mittels einer Schweißverbindung mit dem Hautfeld (4) verbunden sind, **dadurch gekennzeichnet, dass** an den Versteifungsprofilen (2) separate Verstärkungen (5) vorgesehen sind und die Verstärkungen (5) an den Versteifungsprofilen (2) durch Zugbänder (31, 71, 38) gebildet sind, die jeweils im Bereich der Profilstege (32, 72, 36) angeordnet sind.

2. Strukturbauteil nach Anspruch 1, **dadurch gekennzeichnet, dass** die Versteifungsprofile (2) als in Flugzeuglängsrichtung verlaufende Stringer (3; 30; 35) und quer zur Flugzeuglängsrichtung verlaufende Spante (7; 70) ausgebildet sind.

3. Strukturbauteil nach Anspruch 1, **dadurch gekennzeichnet, dass** an den Profilstegen (32, 72, 36) Werkstoffverdickungen (33, 73, 39) zur Aufnahme des Zugbandes (31, 71, 38) vorgesehen sind.

4. Strukturbauteil nach Anspruch 3, **dadurch gekennzeichnet, dass** in die Werkstoffverdickungen (33, 73) Durchgangsbohrungen (34, 74) zur Aufnahme des Zugbandes (31, 71, 38) eingebracht sind.

5. Strukturbauteil nach einem der Ansprüche 1 bis 4, **dadurch gekennzeichnet, dass** ein geschlitzter Stegbereich (36) vorgesehen ist, der eine Aufnahmeöffnung (37) für das Zugband (38) aufweist.

6. Strukturbauteil nach einem der Ansprüche 1 bis 5, **dadurch gekennzeichnet, dass** das Zugband (31, 71) einen mehreckigen Querschnitt aufweist.

7. Strukturbauteil nach einem der Ansprüche 1 bis 5, **dadurch gekennzeichnet, dass** das Zugband (38) einen runden Querschnitt aufweist.

8. Strukturbauteil nach einem der Ansprüche 1 bis 7, **dadurch gekennzeichnet, dass** das Zugband (31, 71, 38) angeraut ist.

9. Strukturbauteil nach einem der Ansprüche 1 bis 8, **dadurch gekennzeichnet, dass** das Zugband (31) verdrillt ist.

10. Strukturbauteil nach einem der Ansprüche 1 bis 9, **dadurch gekennzeichnet, dass** das Zugband (31, 71, 38) aus hochfesten Stahl- oder Titanlegierungen oder Faserverbundwerkstoffen besteht.

11. Versteifungsprofil für ein Strukturbauteil eines Flugzeuges, **dadurch gekennzeichnet, dass** separate Verstärkungen (5) an den Versteifungsprofilen (2) durch Zugbänder (31, 71, 38) gebildet sind, die jeweils im Bereich der Profilstege (32, 72, 36) angeordnet sind.

12. Versteifungsprofil nach Anspruch 11, **dadurch gekennzeichnet, dass** an den Profilstegen (32, 72, 36) Werkstoffverdickungen (33, 73, 39) mit Aufnahmen (33, 73) für das Zugband (31, 71, 38) vorgesehen sind.

13. Versteifungsprofil nach Anspruch 11, **dadurch gekennzeichnet, dass** ein geschlitzter Stegbereich (36) vorgesehen ist, der eine Aufnahmeöffnung (37) für das Zugband (38) aufweist.

14. Verfahren zur Herstellung eines Strukturbauteils nach einem der vorangegangenen Ansprüche, **dadurch gekennzeichnet, dass** die Versteifungsprofile (2) vor dem Verschweißen mit dem Hautfeld (4) mit separaten Verstärkungen (5) versehen werden und an den Profilstegen (32, 72, 36) Zugbandaufnahmen (34, 74, 37) ausgebildet werden, die die als Zugband (31, 71, 38) ausgebildeten separaten Verstärkungen (5) aufnehmen.

15. Verfahren nach Anspruch 14, **dadurch gekennzeichnet, dass** als Zugbandaufnahmen Durchgangsbohrungen (34, 74) in Werkstoffverdickungen (33, 73) eingebracht werden.

16. Verfahren nach Anspruch 15, **dadurch gekennzeichnet, dass** die Zugbänder (31, 71) in die Durchgangsbohrungen (34, 74) eingezogen und verdrillt werden.

17. Verfahren nach einem der Ansprüche 14 oder 15, **dadurch gekennzeichnet, dass** das Zugband (38) in einen geschlitzten unteren Stegbereich (36) in eine Aufnahmeöffnung (37) eingeführt wird.

18. Verfahren nach einem der Ansprüche 14 bis 17, **dadurch gekennzeichnet, dass** die Versteifungsprofile (2) mit einen Lösungsglühen wärmebehandelt werden.

19. Verfahren nach einem der Ansprüche 14 bis 18, **dadurch gekennzeichnet, dass** die Versteifungsprofile (2) im Bereich der eingebrachten Zugbänder (31, 71, 38) zusammengepresst und die eingebrachten Zugbänder (31, 71, 38) mit den Versteifungsprofilen formschlüssig verbunden werden.

## Claims

1. Structural member for an aircraft, wherein the structural member (1) has at least one metal skinplate (4) as well as a plurality of stiffening profiles (2) applied to the said metal skinplate (4) and the said stiffening profiles (2) are connected, at least in some cases, to the skin panel (4) by means of a welded joint, **characterised in that** separate reinforcements (5) are provided on the stiffening profiles (2) and the said reinforcements (5) on the stiffening profiles (2) are formed by tie rods (31, 71, 38) which are disposed, in each case, in the region of the profile webs (32, 72, 36).

2. Structural member according to claim 1, **characterised in that** the stiffening profiles (2) are constructed as stringers (3; 30; 35) running in the longitudinal direction of the aircraft and ribs (7; 70) running transversely to the longitudinal direction of the aircraft.

3. Structural member according to claim 1, **characterised in that** thickened portions in the material (33, 73, 39) for receiving the tie rod (31, 71, 38) are provided on the profile webs (32, 72, 36).

4. Structural member according to claim 3, **characterised in that** through-bores (34, 74) for receiving the tie rod (31, 71, 38) are incorporated in the thickened portions in the material (33, 73).

5. Structural member according to one of claims 1 to 4, **characterised in that** a slit web region (36) is provided which has a receiving aperture (37) for the tie rod (38).

6. Structural member according to one of claims 1 to 5, **characterised in that** the tie rod (31, 71) has a polygonal cross-section.

7. Structural member according to one of claims 1 to 5, **characterised in that** the tie rod (38) has a round cross-section.

8. Structural member according to one of claims 1 to 7, **characterised in that** the tie rod (31, 71, 38) is roughened.

9. Structural member according to one of claims 1 to 8, **characterised in that** the tie rod (31) is twisted.

10. Structural member according to one of claims 1 to 9, **characterised in that** the tie rod (31, 71, 38) consists of high-strength steel alloys or titanium alloys or fibre composite materials.

11. Stiffening profile for a structural member of an aircraft, **characterised in that** separate reinforcements (5) on the stiffening profiles (2) are formed by tie rods (31, 71, 38) which are disposed, in each case, in the region of the profile webs (32, 72, 36).

12. Stiffening profile according to claim 11, **characterised in that** thickened portions in the material (33, 73, 39) with receptacles (33, 73) for the tie rod (31, 71, 38) are provided on the profile webs (32, 72, 36).

13. Stiffening profile according to claim 11, **characterised in that** a slit web region (36) is provided which has a receiving aperture (37) for the tie rod (38).

14. Process for manufacturing a structural member according to one of the preceding claims, **characterised in that** the stiffening profiles (2) are provided, before being welded to the skin panel (4), with separate reinforcements (5), and tie-rod receptacles (34, 74, 37), which receive the separate reinforcements (5) constructed as a tie rod (31, 71, 38), are constructed on the profile webs (32, 72, 36).

15. Process according to claim 14, **characterised in that** through-bores (34, 74) are incorporated, as tie-rod receptacles, in thickened portions in the material (33, 73).

16. Process according to claim 15, **characterised in that** the tie rods (31, 71) are drawn into the through-bores (34, 74) and twisted.

17. Process according to one of claims 14 or 15, **characterised in that** the tie rod (38) is introduced into a receiving aperture (37) in a slit lower web region (36).

18. Process according to one of claims 14 to 17, **characterised in that** the stiffening profiles (2) are heat-treated with a solution heat treatment.

19. Process according to one of claims 14 to 18, **characterised in that** the stiffening profiles (2) are pressed together in the region of the tie rods (31, 71, 38) which have been incorporated, and the latter are connected to the said stiffening profiles in a form-locking manner.

## Revendications

1. Elément structurel pour avion, dans lequel l'élément structurel (1) présente au moins une tôle de peau (4) ainsi que plusieurs profilés raidisseurs (2) appliqués sur la tôle de peau (4) et, au moins en partie, les profilés raidisseurs (2) sont reliés à la zone de peau (4) au moyen d'une liaison soudée, **caractérisé en ce qu'**il est prévu sur les profilés raidisseurs (2) des renforts séparés (5) et les renforts (5) sont formés sur les profilés raidisseurs (2) par des bandes de traction (31, 71, 38) qui sont aménagées respectivement dans la zone des âmes profilées (32, 72, 36).

2. Elément structurel selon la revendication 1, **caractérisé en ce que** les profilés raidisseurs (2) sont conformés en raidisseurs (3; 30; 35) s'étendant dans la direction longitudinale de l'avion et en couples (7; 70) s'étendant transversalement à la direction longitudinale de l'avion.

3. Elément structurel selon la revendication 1, **caractérisé en ce qu'**il est prévu, sur les âmes profilées (32, 72, 36) des épaississements de matériau (33, 73, 39) pour recevoir la bande de traction (31, 71, 38).

4. Elément structurel selon la revendication 3, **caractérisé en ce que** des perçages (34, 74) sont ménagés dans les épaississements de matériau (33, 73) pour recevoir la bande de traction (31, 71, 38).

5. Elément structurel selon l'une quelconque des revendications 1 à 4, **caractérisé en ce qu'**il est prévu une zone d'âme fendue (36) qui présente une ouverture réceptrice (37) pour la bande de traction (38).

6. Elément structurel selon l'une quelconque des revendications 1 à 5, **caractérisé en ce que** la bande de traction (31, 71) présente une section transversale polygonale.

7. Elément structurel selon l'une quelconque des revendications 1 à 5, **caractérisé en ce que** la bande de traction (38) présente une section transversale ronde.

8. Elément structurel selon l'une quelconque des revendications 1 à 7, **caractérisé en ce que** la bande de traction (31, 71, 38) est grenée.

9. Elément structurel selon l'une quelconque des revendications 1 à 8, **caractérisé en ce que** la bande de traction (31) est torsadée.

10. Elément structurel selon l'une quelconque des revendications 1 à 9, **caractérisé en ce que** la bande de traction (31, 71, 38) est constituée d'alliages d'acier ou de titane ou de matériaux renforcés par des fibres très résistants.

11. Profilé raidisseur pour élément structurel d'un avion, **caractérisé en ce que** des renforts séparés (5) sont formés sur les profilés raidisseurs (2) par des bandes de traction (31, 71, 38) qui sont aménagées respectivement dans la zone des âmes profilées (32, 72, 36).

12. Profilé raidisseur selon la revendication 11, **caractérisé en ce qu'**il est prévu sur les âmes profilées (32, 72, 36) des épaississements de matériau (33, 73, 39) avec des logements (33, 73) pour la bande de traction (31, 71, 38).

13. Profilé raidisseur selon la revendication 11, **caractérisé en ce qu'**il est prévu une zone d'âme fendue (36) qui présente une ouverture réceptrice (37) pour la bande de traction (38).

14. Procédé de fabrication d'un élément structurel selon l'une quelconque des revendications précédentes, **caractérisé en ce que** les profilés raidisseurs (2) sont pourvus, avant le soudage avec la zone de peau (4), de renforts séparés (3) et, sur les âmes profilées (32, 72, 36), se présentent des logements de bande de traction (34, 74, 37), qui reçoivent les renforts séparés (5) formés en bande de traction (31, 71, 38).

15. Procédé selon la revendication 14, **caractérisé en ce que** des perçages (34, 74) sont ménagés comme logements de la bande de traction dans des épaississements de matériau (33, 73).

16. Procédé selon la revendication 15, **caractérisé en ce que** les bandes de traction (31, 71) sont insérées dans les perçages (34, 74) et torsadées.

17. Procédé selon l'une quelconque des revendications 14 ou 15, **caractérisé en ce que** la bande de traction (38) est insérée dans une ouverture réceptrice (37) ménagée dans une zone d'âme inférieure fendue (36).

18. Procédé selon l'une quelconque des revendications 14 à 17, **caractérisé en ce que** les profilés raidisseurs (2) sont traités à chaud par recuit de mise en solution.

19. Procédé selon l'une quelconque des revendications 14 à 18, **caractérisé en ce que** les profilés raidisseurs (2) sont comprimés dans la zone des bandes de traction insérées (31, 71, 38) et les bandes de traction insérées (31, 71, 38) sont reliées aux profilés raidisseurs avec adaptation de formes.
